# FASCICULE DE BREVET EUROPEEN

(11) **EP 1 298 009 B1**
(45) Date de publication et mention de la délivrance du brevet: **21.04.2004**
(21) Numéro de dépôt: 02292299.1
(22) Date de dépôt: 18.09.2002
(51) Int. Cl.: B60R 16/02

(54) **Projecteur d'éclairage ou de signalisation pour véhicule et système d'éclairage ou de signalisation équipé d'au moins un tel projecteur**
Beleuchtungs- oder Signalierungscheinwerfer und Verfahren mit zumindest einem Scheinwerfer
Lighting or signaling headlight and system with at least one headlight

(30) Priorité: 24.09.2001 FR 0112399
(43) Date de publication de la demande: 02.04.2003
(73) Titulaire: VALEO VISION, 93012 Bobigny Cédex (FR)
(72) Inventeur: Cros, Christophe, 93012 Bobigny Cedex (FR); Dubrovin, Alexis, 93012 Bobigny Cedex (FR); Lacombe, Patrick, 93012 Bobigny Cedex (FR)

(56) Documents cités:
- DE-A- 19 946 774
- US-A- 4 942 571
- US-B1- 6 282 668
- EMBACHER M M: "DC MOTOR CONTROL IN VEHICLE BODY APPLICATIONS AS A PRACTICAL EXAMPLE OF A COST COMPETITIVE CAN NETWORKING SOLUTION" INGENIEURS DE L'AUTOMOBILE, RAIP. BOULOGNE, FR, no. 692, 1 octobre 1994 (1994-10-01), pages 20-22, XP000467532 ISSN: 0020-1200

## Description

La présente invention concerne un projecteur d'éclairage ou de signalisation pour véhicule. Elle concerne aussi un système d'éclairage ou de signalisation équipé d'au moins un tel projecteur. Elle s'étend directement aux dispositifs de signalisation comme les feux de véhicule, mais aussi à d'autres produits similaires comme les radars de recul ou autres.

Dans l'état de la technique, on a déjà proposé des produits pour véhicules dont la fonction d'éclairage ou la fonction de signalisation est définie selon des normes, étatiques notamment. Par ailleurs, particulièrement dans le domaine de l'automobile, le recours aux ordinateurs embarqués a conduit à l'introduction dans le véhicule de concepts dérivés de l'informatique. Il en est résulté que le produit appelé projecteur d'éclairage ou le produit appelé feu de signalisation a pris une structure dans laquelle on a pu le faire évoluer vers une architecture de réseau embarqué. Depuis, la plupart des véhicules ont été dotés d'un calculateur connecté à divers périphériques par l'intermédiaire d'un réseau embarqué.

Un exemple de réseau embarqué pour le véhicule est le réseau CAN. Un tel réseau permet notamment de réduire le nombre de conducteurs le long desquels transitent les signaux et les tensions d'alimentation, pour les signaux particulièrement en multiplexant dans le temps les informations qui transitent sur le bus du réseau. Un autre exemple de réseau embarqué est décrit dans US 4 942 571.

Avec les perfectionnements des fonctions d'éclairage et des fonctions de signalisation, avec la multiplication des versions d'un même véhicule, des versions d'un même projecteur ou des versions d'un même feu de signalisation ayant des caractéristiques différentes, on a déjà proposé de nouvelles fonctions, chacune liée à l'éclairage ou à la signalisation.

Par exemple, l'utilisation pour l'éclairage de lampes à décharge exige dans certaines configurations que l'orientation du projecteur soit corrigée de manière dynamique de façon à empêcher que les conducteurs venant en face du véhicule équipé ne soient éblouis par la puissance d'illumination d'un tel projecteur.

On a donc utilisé les possibilités d'extension du réseau embarqué en ajoutant un ou plusieurs contrôleurs de services, ici par exemple, pour contrôler un ou plusieurs moteurs de correction d'assiette ou d'orientation du projecteur relativement au châssis et/ou à la route qui chacun commande des dispositifs électromécaniques agissant sur l'orientation du faisceau lumineux produit.

Cependant, pour connecter chacun de ces contrôleurs de services au dispositif électromécanique associé au projecteur, il faut utiliser un faisceau de connexion du projecteur au réseau. Il en résulte qu'à chaque fonction que l'on ajoute au projecteur le nombre de conducteurs dans le véhicule s'accroît.

Comme les longueurs de ces conducteurs peuvent être importantes, pour des raisons d'encombrement dans l'habitacle moteur en particulier, il en résulte l'augmentation du risque de perturbation électromagnétique, ainsi que l'augmentation du risque lié aux coupures de faisceaux de fils de connexion électrique lors d'interventions sur le véhicule ainsi qu'une réduction de la sûreté de fonctionnement.

De plus, à chaque ajout d'une fonction sur un même véhicule, il faut calculer un nouveau faisceau de fils de connexion électrique et la gestion d'une telle solution devient prohibitive surtout avec la multiplication des options disponibles à l'achat d'un type de véhicule d'une même marque automobile.

Par ailleurs, en plus des questions d'apparence esthétique propres à chaque constructeur automobile, les exigences de deux constructeurs automobiles peuvent différer quant au comportement d'une même fonction d'éclairage ou de signalisation, ce qui contraint l'équipementier automobile à développer pour chacun d'eux un type de projecteur ou de feu particulier, ce qui augmente ses coûts de conception.

L'invention apporte un remède à ces inconvénients de l'état de la technique. Dans la suite on entendra, sauf indication du contraire, les fonctions d'éclairage et de signalisation comme similaires relativement au problème posé ainsi qu'à la solution apportée par l'invention.

En effet, celle-ci concerne un projecteur d'éclairage et/ou de signalisation pour véhicule, du type comportant une enveloppe contenant des moyens d'éclairage et/ou de signalisation et éventuellement des moyens de services pour exécuter des services comme la conformation de faisceau d'éclairage ou le réglage automatique de l'orientation du faisceau lumineux. Le projecteur de l'invention comporte essentiellement, mécaniquement associée à son enveloppe, une carte électronique comportant :
- un connecteur d'alimentation à un dispositif d'alimentation électrique de puissance ;
- un connecteur standard quels que soient les services activés sur le projecteur, ledit connecteur standard étant destiné à être relié au bus multiplexé d'un réseau embarqué ;
- des moyens de contrôle pour contrôler les moyens d'éclairage et éventuellement les moyens de service, les dits moyens de contrôle étant connectés au dit connecteur d'alimentation et au dit connecteur standard de façon à échanger des commandes et des informations d'état du projecteur sur le bus multiplexé ;
- un bus interne connecté, d'une part, aux moyens de contrôle et, d'autre part, aux moyens d'éclairage et aux moyens de service pour échanger entre eux des commandes générés par les moyens de contrôle et des informations d'état du projecteur.

L'invention concerne un système d'éclairage et/ou de signalisation de véhicule comportant au moins un projecteur d'éclairage et/ou de signalisation intégrant une carte électronique ou contrôleur et qui est connecté par un connecteur standard au faisceau du bus multiplexé d'un réseau embarqué de commande d'éclairage et/ou de signalisation.

D'autres caractéristiques et avantages de la présente invention seront mieux compris à l'aide de la description et des dessins annexés dans lesquels :
- la figure 1 illustre un exemple de réalisation d'un système de contrôle d'éclairage selon l'état de la technique ;
- la figure 2 illustre un autre exemple de réalisation d'un système de contrôle d'éclairage selon l'état de la technique ;
- la figure 3 représente un schéma illustrant les moyens de l'invention pour permettre une évolution d'une plate-forme en quatre niveaux ;
- la figure 4 est un schéma bloc d'un projecteur selon un mode de réalisation de la présente invention.

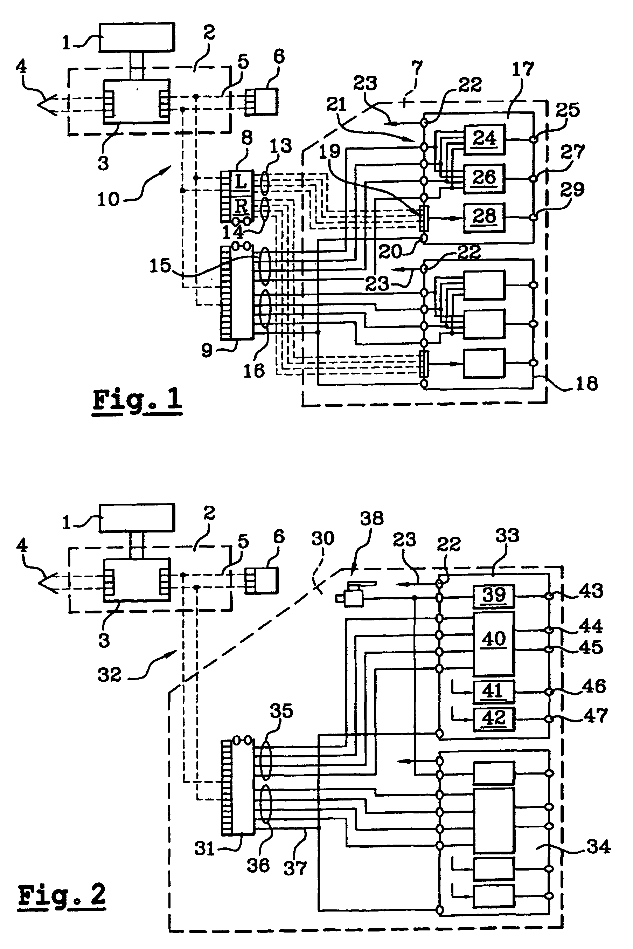

A la figure 1, on a représenté un calculateur embarqué 1 à bord d'un véhicule qui est connecté à différentes charges par un réseau qui a été schématiquement représenté dans le rectangle 2.

Le réseau embarqué 2 comporte un contrôleur de bus 3 qui porte des connecteurs sur des faisceaux comme le faisceau 4 vers d'autres périphériques et le faisceau 5 vers un périphérique 6 et le faisceau 10 vers un contrôleur d'éclairage 9 et un contrôleur 8 de service.

Les deux contrôleurs 8 et 9 peuvent être disposés dans le compartiment du moteur d'entraînement du véhicule (non représenté) et sont connectés aux deux projecteurs par l'intermédiaire de quatre parties de faisceaux respectivement les parties de faisceaux 13 provenant d'une partie 8L et 14 provenant d'une partie 8R du contrôleur 8 et les parties de faisceaux 15 et 16 provenant du contrôleur 9.

Chaque contrôleur possède des moyens pour activer le projecteur gauche comme le projecteur 17 ou le projecteur droit comme le projecteur 18.

A la figure 1, on a représenté seulement sur le projecteur 17 les moyens de contrôle directement activé par les contrôleurs 8 et 9.

Dans le cas d'un véhicule équipé d'une lampe à décharge, le projecteur comporte en plus des lampes habituelles à filament, qui sont mises en marche à l'aide d'une série d'interrupteurs commandés 24, ils comportent aussi un ballast qui est un circuit électronique permettant la mise en route, le maintien allumé et la surveillance de la lampe à décharge qui lui est connecté.

A cet effet, le contrôleur 9 d'éclairage est connecté par le faisceau 15 à des entrées convenables du projecteur 21 et les différents signaux de commandes qui sont décodés et mis en oeuvre sur les modules 24 et 26.

Les sorties des modules 24 et 26 sont respectivement connectées par le point 25 aux lampes à filament classique et par le point 27 à la lampe à décharge.

Enfin, l'utilisation d'une lampe à décharge dans un projecteur d'éclairage automobile exige que soit disposé un moyen de réglage de l'orientation du projecteur en fonction de l'attitude instantanée du véhicule sur la route. En effet, les lampes à décharge produisent un flux lumineux de forte intensité. Un conducteur conduisant un véhicule arrivant face à un véhicule équipé d'une lampe à décharge peut être ébloui et des accidents doivent être évités en empêchant que la partie supérieure du faisceau lumineux d'éclairage n'atteigne le niveau du visage des conducteurs des véhicules adverses.

Le moyen de contrôle 28 d'un moteur de réglage dans l'orientation 29 est connecté par un connecteur 19 à un faisceau 13 issu de la partie L du contrôleur d'assiette 8. Le contrôleur d'assiette reçoit des informations du calculateur embarqué 1 de sorte qu'un programme inscrit dans le contrôleur 28 est exécuté pour permettre de réduire l'excursion vers le haut du faisceau lumineux quand le véhicule suit un mouvement oscillatoire lié aux chaos sur la route.

Enfin, le projecteur intègre des fonctions de diagnostic 22 qui sont connectées à un moyen d'exploitation des diagnostics 23 sur le réseau embarqué, ce qui exige une connexion supplémentaire sur le bus multiplexé.

Le projecteur 18 droit est identique et ne sera pas plus décrit.

Dans l'exemple de l'état de la technique de la figure 1, on reconnaît que les faisceaux de connexion entre les calculateurs 8 et 9 et les projecteurs 17 et 18 sont multipliés dès que l'on augmente le nombre de services.

On remarque aussi que chaque faisceau de connexion 13 à 16 peut présenter une longueur non négligeable relativement aux activités électromagnétiques dommageables à l'environnement du véhicule.

A la figure 2, on a représenté un autre exemple d'un système de contrôle 30 pour deux projecteurs selon l'état de la technique, contrôle dans lequel le contrôleur de services 8 et le contrôleur d'éclairage 9 de l'exemple décrit ci-dessus ont été intégrés sur un seul contrôleur 31, relié aux deux projecteurs gauche et droite par des faisceaux de connexion séparés du fait que les deux projecteurs sont relativement distants l'un de l'autre lorsqu'ils sont montés sur un véhicule.

On supprime ainsi l'unité centrale ou le contrôleur de contrôle de l'orientation et on réduit le coût du système d'ensemble grâce à la réduction du coût de la fonction d'orientation de mise à niveau que l'on a transféré sur le contrôleur intégré 31.

A la figure 2, les mêmes éléments que ceux de la figure 1 portent le même numéro de référence et ne sont pas plus décrits.

Le système de contrôle 30 comporte essentiellement trois parties qui sont constituées par le contrôleur 31 et deux cartes électroniques disposées la carte électronique 33 à proximité du projecteur de gauche et la carte électronique 34 à proximité du projecteur de droite. Le système de contrôle 30 est tout entier connecté par un premier faisceau de connexion 32 au réseau 2 et par deux faisceaux de connexion aux deux projecteurs droite et gauche.

Le contrôleur intégré 31 exécute à la fois la fonction de contrôle de l'éclairage proprement dit (allumage, contrôle, extinction) ainsi que la fonction de contrôle de l'orientation dans le cas d'une lampe à Xénon notamment.

Le contrôleur 31 est connecté par un premier faisceau 35 aux entrées convenables du projecteur de gauche 33 et par un faisceau 36 aux entrées convenables du projecteur de droite 34.

Une distribution de masse électrique est effectuée depuis le contrôleur 31 à l'aide d'un conducteur 37 qui est envoyé séparément aux projecteurs 33 et 34, dont le reste de l'alimentation est réalisée à part.

Dans l'exemple de réalisation antérieur représenté à la figure 2, quatre conducteurs sont nécessaires pour réaliser la fonction de contrôle d'éclairage. Les quatre fils sont directement connectés à un circuit de contrôle d'éclairage 40 qui présente deux sorties respectivement 44 et 45 pour allumer ou éteindre deux lampes respectivement réservées au fonctionnement en code et au fonctionnement en croisement.

Le même groupe de quatre entrées est connecté respectivement à un module de contrôle 41 qui réalise la fonction de contrôle électronique d'une lampe à Xénon qui est connectée par la borne 46 et d'un contrôleur 42 qui est connecté par sa borne de sortie 47 à un projecteur longue portée.

La carte électronique 33 peut comporter ensuite une borne de connexion à des organes de commande d'orientation du faisceau lumineux comme le dispositif 38. Le signal reçu de la borne est transmis à une entrée d'informations avec un seul conducteur qui est connecté au contrôleur 39 qui permet de réaliser l'orientation automatique du projecteur par le biais d'un moteur électrique connecté à la borne de sortie 43.

Dans l'exemple de réalisation antérieure représenté à la figure 2, le contrôleur 31 est disposé à proximité du tableau de bord, dans l'habitacle du véhicule, tandis que les projecteurs 33 et 34 sont disposées dans le compartiment moteur, à proximité des projecteurs d'éclairage. Le contrôleur 31 présente une structure figée par masquage d'un circuit intégré et il est adapté à un type déterminé de projecteur.

Selon l'invention, au contraire, le système de contrôle des projecteurs est entièrement intégré à chaque projecteur de sorte que le nombre et la longueur des faisceaux de connexion sont réduits pour améliorer la sûreté de fonctionnement.

A cette fin, chaque projecteur comporte donc une carte électronique sur laquelle est monté un contrôleur intégré comportant à la fois des moyens de contrôle de moyens d'éclairage et des moyens de contrôle de moyens de services. Moyens d'éclairage et moyens de services sont installés, ou seulement certains d'entre eux, sur un projecteur donné. Mais le contrôleur intégré de la carte électronique de chaque projecteur est entièrement susceptible de contrôler n'importe lequel d'entre eux. Dans la suite de la description, on ne distinguera pas toujours entre la carte électronique et le contrôleur intégré qu'elle porte, sachant que selon les implémentations de l'invention, un ou plusieurs circuits intégrés sont nécessaires, et que, si plusieurs d'entre eux sont nécessaires, il n'est pas forcément nécessaire de recourir à un support de type circuit imprimé, mais par exemple, directement d'utiliser directement le corps du projecteur recouvert localement d'un substrat métallique isolé.

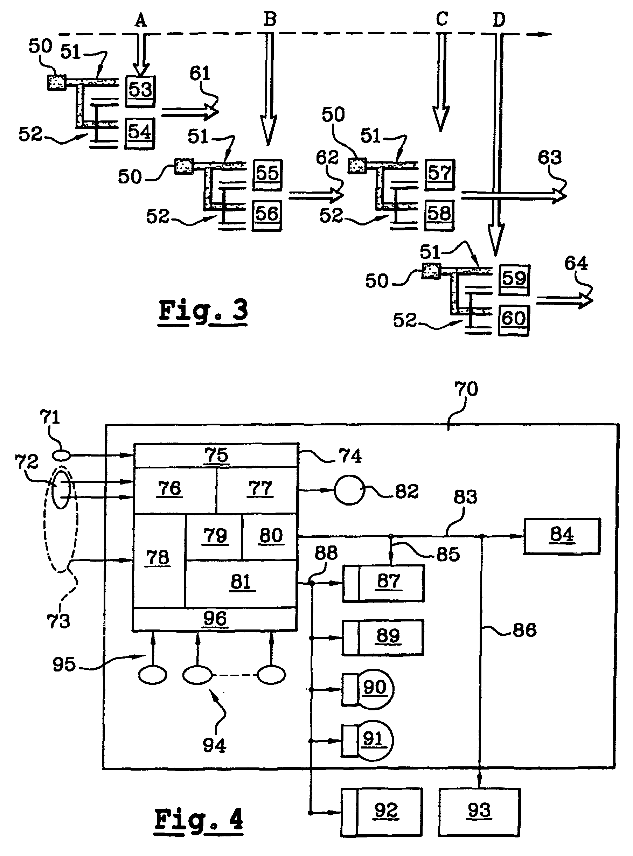

Un avantage de l'invention est de permettre de faire évoluer une gamme de projecteurs au cours du temps ou du choix d'options de services notamment ou de choix de conception de services divers provoquée par des nouveautés dans les véhicules futurs. L'invention permet donc de faire évoluer un projecteur selon un principe de plate-forme à plusieurs niveaux ainsi qu'il va être expliqué à l'aide de la figure 3.

A la figure 3, on a représenté une plate-forme à quatre niveaux A à D, chaque niveau correspondant à une évolution dans une gamme offerte de fonctions d'éclairage et/ou de services.

Un avantage de l'invention est de permettre que le calculateur et le réseau restent strictement identiques pour toute la plate-forme, tandis que seuls certains éléments du contrôleur intégré au projecteur sont changés, notamment par simple programmation, en fonction des services nouveaux qui sont ajoutés de niveau en niveau.

Au niveau A de la plate-forme, le contrôleur de réseau 50 actionne ou active un faisceau de connexion 51 au bus multiplexé du véhicule de sorte à échanger des commandes et des informations d'état du projecteur adressé sur le bus multiplexé avec le calculateur embarqué du véhicule (non représenté). La carte électronique 53 ou 54 est équipée d'un contrôleur (non représenté) qui participe à ce dialogue par l'intermédiaire d'un standard quelles que soient les fonctions d'éclairage ou les services activés sur le projecteur. De plus, la carte électronique 53 ou 54 est connectée au réseau d'alimentation électrique du véhicule par un connecteur d'alimentation (non représenté) par un second faisceau 52. Les cartes électroniques sont associées aux projecteurs de gauche (carte 53) et de droite (carte 54) de façon à produire un ensemble 61 de fonctions d'éclairage et de services, déterminés selon le niveau dans la plate-forme conçue.

Dans l'équipement d'un projecteur de niveau A de la plate-forme, on prévoit des lampes de type halogène ainsi qu'un simple réglage manuel de l'orientation du projecteur.

Au niveau B de la plate-forme, la carte électronique 55 associée au projecteur de gauche et la carte électronique 56 associée au projecteur de droite sont munies chacune du même contrôleur intégré que les cartes 53 et 54 des projecteurs du niveau A de la plate-forme. De même, les faisceaux 51 et 52 et le contrôleur de bus 50 sont conservés pour l'ensemble des niveaux de la plate-forme. On conçoit donc l'avantage de l'invention de standardiser un nombre important de composants d'un système d'éclairage. La plupart des moyens de contrôle peuvent être conservés sur la carte électronique, et ils sont seulement validés par l'inscription d'un identifiant de niveau (A à D) dans la plate-forme, de sorte que, seulement par programmation du contrôleur intégré, seules les fonctions d'éclairage et les services autorisés au niveau considéré sont activés.

Dans un projecteur de niveau B de la plate-forme, le faisceau produit par les lampes d'éclairage peut être configuré selon la technologie des lampes à décharge, ainsi qu'un service d'orientation dynamique du projecteur réalisé comme il a été décrit à l'aide de la figure 2.

Au niveau C de la plate-forme, la technologie des lampes à décharge a été intégrée dans un projecteur bi-fonction, et des services de conformation de la partie inférieure du faisceau d'éclairage selon les technologies d'éclairage en virage ainsi qu'il est connu de l'homme du métier. Les cartes électroniques 57 et 58 sont sensiblement identiques aux cartes électroniques 55 et 56 de niveau B. Mais les fonctions d'éclairage et les services disponibles en exploitation 63 sont plus étendus que ceux de l'exploitation 62 de niveau B.

Dans ce cas, les services permettant de réaliser la bi-fonction de type lampe à décharge, ainsi que la conformation de la partie basse de faisceau lumineux sont intégrés directement sur les cartes 57 (projecteur gauche) ou 58 (projecteur droit).

Au niveau D de la plate-forme, des corrections AFS encore appelées « éclairage intelligent » de partie basse du faisceau d'éclairage de type lape à décharge sont prévues ainsi que des services d'orientation dynamique qui ont déjà été décrits. On ajoute des services liés à des accessoires électro-optiques comme un Lidar, ou un système d'illumination infrarouge.

Selon l'invention, la plupart des moyens nécessaires à l'implémentation des divers services ne changent pas sur toute l'étendue de la plate-forme.

De ce fait, on a résolu le problème posé au début de la présente description selon lequel on a raccourci la longueur du faisceau d'une part et on a supprimé la multiplication des contrôleurs de l'état de la technique d'autre part.

Par ailleurs, on a maintenant à disposition une technologie qui permet de ne conserver qu'une seule carte de contrôle électronique qui évolue au fur et à mesure des besoins d'une gamme ou d'une plate-forme.

Dans le cas d'un système disposant d'une fonction d'éclairage en virage, quand le dispositif est fixé sur une position angulaire, il est possible d'utiliser un capteur qui indique au contrôleur d'éclairage que le moteur d'orientation est bloqué dans une position angulaire, le contrôleur donnant, à ce moment là, un ordre supplémentaire à un moteur d'orientation de mise en position de non-éblouissement du système optique.

Cette fonction de blocage au niveau non-éblouissant du faisceau peut être exécutée sans avoir à recevoir de commande provenant de l'extérieur du projecteur, et en particulier sans surcharger le réseau ni le calculateur en partie à bord du véhicule.

Enfin, on note que l'ensemble des services et des moyens pour exécuter ces services qui sont intégrés à une carte électronique intégrée au projecteur partagent, par l'intermédiaire du contrôleur d'éclairage, la même ligne d'alimentation, ainsi que les mêmes moyens de projection électrique que le reste du système de contrôle d'éclairage.

Dans un état de la technique, le réseau embarqué comporte en plus une ligne de diagnostic spécialisée à cet effet. Selon l'invention, la ligne de diagnostic étant supprimée, le bus échange aussi des données de diagnostic et le contrôleur du bus du réseau embarqué gère à la fois pour l'échange de données liées à l'exploitation du contrôleur d'éclairage et de services et pour l'échange de données de diagnostic.

Le système de contrôle d'éclairage de l'invention n'exige pas de protection électrique particulière du bus lui-même parce qu'il comporte dans le projecteur une fonction de protection électrique de l'alimentation du projecteur lui-même.

Selon un autre aspect de l'invention, le nouveau système de contrôle d'éclairage selon l'invention conduit aussi à des changements dans la définition des systèmes d'éclairage pour véhicules.

En effet, en plus des spécifications actuelles de style, de photométrie, de contraintes thermiques et électriques auxquelles doit répondre la conception d'un système d'éclairage ou de signalisation, l'invention permet d'ajouter un moyen de caractérisation du comportement des fonctions d'éclairage ou de signalisation ainsi que des services associés.

Ce comportement peut être contrôlé à l'aide d'une contrôleur de comportement (non représenté) qui est intégré au système de contrôle d'éclairage. Par exemple, la fonction éclairage en virage peut avoir différents comportements lisses ou rapides.

Selon un autre aspect de l'invention, la coordination des fonctions droite et gauche des projecteurs peut être linéaire, non-linéaire, ou complexe.

Dans un mode de réalisation, le contrôle de l'éclairage est anticipé au niveau du système de contrôle d'éclairage en utilisant des informations disponibles sur le réseau telles que la vitesse du véhicule, l'accélération du véhicule, des indications de navigation.

A cet effet, les paramètres utilisés pour l'anticipation sont entrés sur un contrôleur d'anticipation, qui produit une valeur anticipée de contrôle d'éclairage, comme l'allumage ou l'extinction d'une lampe, l'augmentation ou la diminution du flux lumineux produit par l'une des lampes, et/ou une commande de fonction de type AFS ou éclairage intelligent, et/ou une commande de changement d'orientation du faisceau lumineux.

Dans un mode de réalisation de l'invention, le système de contrôle d'éclairage de l'invention comporte des moyens permettant de spécifier les performances d'éclairage ou de signalisation et la signature technique du projecteur ou feu.

En effet, selon le style du véhicule qu'un constructeur automobile souhaite concevoir, les paramètres de fonctionnement de l'éclairage ou de la signalisation et des divers services qui leur sont associés dans le cadre de la présente invention, peuvent être déterminés dans des registres lus lors d'au moins une étape de paramétrage du fonctionnement du système de contrôle d'éclairage de l'invention de façon à présenter une cohérence du comportement des divers composants du véhicule, cette cohérence déterminant la signature désirée du véhicule et/ou de la marque du constructeur.

A cette fin, la carte électronique du projecteur de l'invention comporte un moyen qui, en fonction d'une signature qui est chargée lors du démarrage du véhicule, sélectionne une classe de performance pour le projecteur et ses services, comme la portée de l'éclairage, la dynamique de réaction de l'orientation dynamique du projecteur, etc...

Selon un autre aspect de l'invention, la carte électronique de chaque projecteur est munie de moyens permettant de connecter et de déconnecter les moyens d'éclairage et/ou les moyens de services ou de régler un paramètre de leur fonctionnement et éventuellement des moyens pour réaliser des diagnostics sur l'état de fonctionnement des dits moyens d'éclairage et des dits moyens de services.

Selon un autre aspect de l'invention, la carte électronique du projecteur de l'invention comporte un moyen pour exécuter la connexion du projecteur sur le bus multiplexé du véhicule de sorte que soit assuré un dialogue périodique entre le projecteur et le véhicule.

Lors de ce dialogue périodique est effectuée l'insertion d'ordres de commande provenant du calculateur embarqué qui dialogue sur le bus multiplexé et parvenant au projecteur, ainsi que des informations d'état du projecteur, notamment des moyens d'éclairage et des divers moyens de services cités précédemment. Il en résulte que le calculateur embarqué surveille en permanence l'état du système d'éclairage, les commandes qu'il reçoit.

Il est donc possible de réaliser automatiquement des diagnostics et de prendre des mesures adaptées en fonction des situations critiques, particulièrement en détectant des situations de défaillance dans lesquelles il est possible de placer un projecteur, une lampe d'un projecteur, un organe de service du projecteur, dans un mode de fonctionnement dégradé.

Selon un autre aspect de l'invention, le système de contrôle d'éclairage peut comporter un module de régulation de l'énergie d'alimentation. A cet effet, le câble d'alimentation électrique du projecteur est connecté à la sortie d'un régulateur d'alimentation. Le régulateur d'alimentation permet de réduire les variations de tension continue d'alimentation dans une gamme de variation qui protège les lampes à filament, aussi bien à incandescence que les lampes halogènes, disposées dans les projecteurs, ce qui optimise leur durée de vie.

Selon un autre aspect de l'invention, le système d'alimentation générale du véhicule en énergie électrique ne reçoit plus d'appel important de courant de la part du système d'éclairage. En effet, le contrôleur intégré de la carte électronique du projecteur de l'invention comporte un module de séquencement d'allumage des différentes charges comprises dans un projecteur, de sorte que les différentes charges sont alimentées selon des schémas permettant d'optimiser le lissage des courants d'appel.

Selon un autre aspect de l'invention, la source d'alimentation en énergie électrique du véhicule peut être selon des tensions différentes pour un même type de projecteur.

Ainsi, si on souhaite adapter le système de contrôle d'éclairage de l'invention à une source d'alimentation en 42 Volts alors que l'ensemble du système de contrôle d'éclairage est conçu pour une alimentation en 12 Volts, la carte électronique du projecteur de l'invention est équipée d'un convertisseur continu-continu qui convertit la nouvelle tension de 42 Volts en une tension de 12 Volts du fait que l'ensemble du contrôle réalisé par la carte électronique du projecteur de l'invention comporte un câble unique d'alimentation électrique.

A la figure 4, on a représenté un mode de réalisation d'un projecteur selon l'invention. Le projecteur 70 comporte un premier connecteur 71 qui est connecté sur le faisceau d'alimentation en énergie électrique du véhicule. Il comporte un second connecteur standard 72 connecté au bus multiplexé du réseau embarqué ainsi qu'il a été décrit plus haut.

Dans une variante, le réseau présente un bus ayant un troisième connecteur 73 qui est dévolu au pilotage du réseau.

Le projecteur 70 intègre ensuite un contrôleur 74 qui comporte des composants électroniques pour réaliser le contrôle des fonctions d'éclairage et des services complétés le cas échéant de composants de puissance (transistors MOS, drivers de moteurs, etc...) convenablement dimensionnés et qui sont connectés dans le projecteur 70 de sorte que soient assurés les fonctions d'éclairage et les services décrits à l'aide de la figure 3 à titre d'exemple.

Le contrôleur intégré 74 comporte un module 75 de gestion de l'alimentation électrique qui est directement connecté au connecteur d'alimentation 71.

Le module 75 de contrôle de l'alimentation permet de réaliser les fonctions notamment de régulation et de séquencement de l'allumage qui ont été décrits précédemment. Les différents composants du projecteur sont directement alimentés par son intermédiaire.

Le contrôleur 74 comporte ensuite un module d'entrée 76 qui est connecté au réseau par l'intermédiaire du connecteur standard de bus 72.

Le contrôleur 74 comporte ensuite un module de pilotage 77 des moteurs électriques qui sont utilisés pour les divers services précités comme le réglage automatique d'orientation.

Le contrôleur 74 comporte optionnellement un module 78 de contrôle du réseau qui permet d'exploiter les informations issues du bus par le connecteur 73 décrit ci-dessus.

Le contrôleur 74 comporte une unité centrale 79 qui dialogue avec des mémoires et les différents modules qui ont déjà été décrits.

Le contrôleur 74 comporte un module 80 de commutation qui permet de placer les diverses charges électriques associées au projecteur 70 comme les charges 84, 87 ou 93 à la tension d'alimentation contrôlée par le module 75 du contrôleur 74.

A cet effet, le module 80 de commutation d'alimentation du contrôleur 74 présente une porte de sortie qui est connectée à des conducteurs de puissance 83, internes au projecteur. Les conducteurs 83 sont connectés à l'ensemble 84 des lampes qui sont soumises à un contrôle de commutation.

De plus, les conducteurs 83 sont connectés aux divers circuits électroniques de contrôle de puissance comme les circuits de contrôle électronique ou ballast 87 par l'intermédiaire d'un conducteur 85.

Les conducteurs 83 sont aussi connectés par des conducteurs internes 86 à l'ensemble des lampes 93 montées à l'extérieur du projecteur 70 et qui sont directement contrôlées par le module de commutation 80.

Le contrôleur 74 comporte ensuite un module 81 de pilotage de bus qui présente une porte d'accès à un bus 88 interne au projecteur de l'invention. Le bus 88 permet d'échanger des ordres et des informations d'états avec les différents services et modules de services du projecteur d'éclairage.

En particulier, le bus 88 peut être connecté à un module de contrôle et de commande du ballast 87, à un module de contrôle d'un capteur optoélectronique 89, à un module de contrôle d'un actionneur 90, à un module de contrôle des fonctions de contrôle de l'orientation des faisceaux lumineux en virage, et d'un actionneur 91 de conformation du bas du faisceau lumineux produit par le projecteur selon les fonctionnalités de l'AFS ou éclairage intelligent.

Dans la variante où des fonctions électroniques supplémentaires sont ajoutées en face avant du véhicule, le bus 88 est aussi connecté à un module 92 de commande et de contrôle d'état qui assure la gestion de ces fonctions supplémentaires.

Le projecteur 70 intègre enfin une pluralité de capteurs d'état 94 du projecteur et essentiellement des capteurs de défaillance des divers actionneurs 90, 91, 89 du projecteur 70. Le contrôleur 74 intègre un module 96 de traitement des informations d'état du projecteur 70 produites par les capteurs d'état du projecteur 70. Les informations sont transmises par les capteurs 94 par des lignes 95 au module de traitement des informations d'état 96, selon les circonstances, ou bien traitées localement par le contrôleur 74, ou bien retournées après un formatage convenable sur le réseau embarqué pour être traitées par le calculateur de bord du véhicule. Particulièrement, le module 96 comporte des moyens pour placer en mode dégradé tout ou partie des fonctions d'éclairage et/ou des services quand un état de défaillance correspondant a été détecté.

## Revendications

1. Projecteur d'éclairage ou de signalisation pour véhicule, du type comportant une enveloppe contenant des moyens d'éclairage ou de signalisation et éventuellement des moyens de services pour exécuter des services comme la conformation de faisceau d'éclairage ou le réglage automatique de l'orientation du faisceau lumineux, **caractérisé en ce qu'**il comporte, mécaniquement associée à son enveloppe, une carte électronique comportant :
un connecteur (71) d'alimentation à un dispositif d'alimentation électrique de puissance ;
un connecteur (72) standard quelles que soient les services activés sur le projecteur, ledit connecteur standard étant destiné à être relié au bus multiplexé d'un réseau embarqué ;
des moyens (74) de contrôle pour contrôler les moyens d'éclairage ou de signalisation et éventuellement les moyens de service, les dits moyens de contrôle étant connectés au dit connecteur d'alimentation et au dit connecteur standard de façon à échanger des commandes et des informations d'état du projecteur sur le bus multiplexé ;
un bus interne (88) connecté, d'une part, aux moyens de contrôle et, d'autre part, aux moyens d'éclairage ou de signalisation et aux moyens de service pour échanger entre eux des commandes générés par les moyens de contrôle et des informations d'état du projecteur.

2. Projecteur selon la revendication 1, **caractérisé en ce que** les moyens de contrôle comportent un contrôleur intégré (74) connecté à l'intérieur du projecteur (70) au bus multiplexé et aux charges électriques du projecteur (70) soumises à son contrôle.

3. Projecteur selon la revendication 2, **caractérisé en ce que** le contrôleur (53 ; 54) est connecté à un contrôleur de bus (50) par un faisceau (51) et à un dispositif d'alimentation électrique de véhicule par un faisceau (52), et **en ce que** l'ensemble des fonctions d'éclairage ou de signalisation et des services est entièrement contrôlable par un même contrôleur intégré (70) qui comporte des moyens pour activer les seules fonctions d'éclairage ou de signalisation et de services réservés à un niveau (A à D) de plate-forme.

4. Projecteur selon la revendication 2 ou 3, le projecteur comportant un système d'éclairage en virage, **caractérisé en ce que**, quand le projecteur est fixé sur une position angulaire, un capteur indique au contrôleur intégré (74) que le moteur d'orientation est bloqué dans une position angulaire, le contrôleur donnant, à ce moment là, un ordre supplémentaire à un moteur d'orientation de mise en position de non-éblouissement du système optique, sans avoir à recevoir de commande provenant de l'extérieur du projecteur, et en particulier sans surcharger le réseau ni le calculateur en partie à bord du véhicule.

5. Projecteur selon la revendication 2 ou 3, **caractérisé en ce que** la ligne de diagnostic étant supprimée du réseau (2), le bus échange aussi des données de diagnostic et **en ce que** le contrôleur du bus du réseau embarqué gère à la fois l'échange de données liées à l'exploitation du contrôleur intégré (74) et l'échange de données de diagnostic.

6. Projecteur selon la revendication 2 ou 3, **caractérisé en ce que** le contrôle de l'éclairage ou de la signalisation est anticipé en utilisant des informations disponibles sur le réseau telles que la vitesse du véhicule, l'accélération du véhicule, des indications de navigation entrées sur un contrôleur d'anticipation, qui produit une valeur anticipée de contrôle d'éclairage ou de signalisation, comme l'allumage ou l'extinction d'une lampe, l'augmentation ou la diminution du flux lumineux produit par l'une des lampes, et/ou une commande de fonction de type AFS ou éclairage intelligent, et/ou une commande de changement d'orientation du faisceau lumineux.

7. Projecteur selon la revendication 2 ou 3, **caractérisé en ce qu'**il comporte des moyens permettant de spécifier les performances d'éclairage ou de signalisation et la signature technique du projecteur, selon le style du véhicule qu'un constructeur automobile souhaite concevoir, les paramètres de fonctionnement de l'éclairage ou de la signalisation et des divers services qui leur sont associés étant déterminés dans des registres lus lors d'au moins une étape de paramétrage du fonctionnement du système de contrôle d'éclairage de façon à présenter une cohérence du comportement des divers composants du véhicule, cette cohérence déterminant la signature désirée du véhicule et/ou de la marque du constructeur, le système de contrôle d'éclairage comportant un moyen qui, en fonction d'une signature qui est chargée lors du démarrage du véhicule, sélectionne une classe de performance pour le projecteur et ses services, comme la portée de l'éclairage, la dynamique de réaction de l'orientation dynamique du projecteur, etc...

8. Projecteur selon la revendication 2 ou 3, **caractérisé en ce qu'**il comporte un moyen pour exécuter la connexion du projecteur sur le bus multiplexé du véhicule de sorte que soit assuré un dialogue périodique entre le projecteur et le véhicule, notamment l'insertion de commandes provenant du calculateur et parvenant au projecteur, ainsi que des informations d'état du projecteur, notamment des lampes et des divers organes de services cités précédemment, de sorte que le calculateur embarqué indique en permanence l'état du système d'éclairage, les commandes qu'il reçoit et de sorte que soient réalisés automatiquement des diagnostics et soient prises des mesures adaptées en fonction des situations critiques, particulièrement en détectant des situations de défaillance dans lesquelles il est possible de placer un projecteur, une lampe d'un projecteur, un organe de service du projecteur, dans un mode de fonctionnement dégradé.

9. Projecteur selon la revendication 2 ou 3, **caractérisé en ce qu'**il comporte un module de régulation de l'énergie d'alimentation, le câble d'alimentation électrique (52) étant connecté à la sortie d'un régulateur d'alimentation pour réduire les variations de tension continue d'alimentation dans une gamme de variation qui protège les lampes à filament disposées dans les projecteurs, ce qui optimise leur durée de vie.

10. Projecteur selon la revendication 2 ou 3, **caractérisé en ce que** le système d'alimentation générale du véhicule en énergie électrique ne reçoit plus d'appel important de courant de la part du projecteur, le contrôleur intégré (74) du projecteur (70) comportant un module de séquencement d'allumage des différentes charges comprises dans un projecteur, de sorte que les différentes charges sont alimentées selon des schémas permettant d'optimiser le lissage des courants d'appel.

11. Projecteur selon au moins l'une des revendications précédentes, **caractérisé en ce que** le contrôleur intégré (74) comporte au moins l'un des composants suivants :
- un module (75) de gestion de l'alimentation électrique qui est directement connecté à un connecteur d'alimentation (71), pour réaliser les fonctions notamment de régulation et de séquencement de l'allumage ;
- un module d'entrée (76) qui est connecté au réseau par l'intermédiaire d'un connecteur standard (72) au bus multiplexé d'un véhicule ;
- un module de pilotage (77) des moteurs électriques qui sont utilisés pour les diverses fonctions comme le réglage automatique d'orientation ;
- un module (78) de contrôle du réseau qui permet d'exploiter les informations issues du bus par le connecteur (73) ;
- une unité centrale (79) qui dialogue avec des mémoires et les différents modules ;
- un module (80) de commutation qui permet de placer différentes charges (84, 93) à la tension d'alimentation contrôlée par le module (75) par une porte de sortie qui est connectée à une pluralité de conducteurs (83) réservés au projecteur, connectée à l'ensemble (84) des lampes qui sont soumises à un contrôle de commutation, connectée aux divers circuits électroniques de contrôle de puissance comme les circuits de contrôle électronique ou ballast (87) par l'intermédiaire d'une pluralité de conducteurs (85), connecté par une pluralité de conducteurs (86) à l'ensemble des lampes qui sont directement contrôlées par le module de commutation (80) ;
- un module de pilotage de bus interne qui présente une porte d'accès à un bus interne (88) pour échanger des ordres et des informations d'états avec les différents services et modules de services du système de contrôle d'éclairage, à un module de contrôle et de commande du ballast (87), à un capteur optoélectronique (89), à un actionneur (90), des fonctions de conformation de l'orientation des faisceaux lumineux de contrôle du faisceau lumineux en virage, et à un actionneur (91) de conformation du bas du faisceau lumineux produit par le projecteur selon les fonctionnalités de l'AFS ou éclairage intelligent et, si des lampes supplémentaires sont ajoutées au projecteur, le bus interne (88) est aussi connecté à un module de commande et de contrôle d'état (92) qui assure la gestion des fonctionnalités de face avant du véhicule ;
- un module (96) de traitement d'informations d'état du projecteur (70) qui est connecté à une pluralité de capteurs (94) d'état du projecteur, et notamment de capteurs de défaillance des actionneurs du projecteur, pour produire notamment des informations d'état du projecteur à destination de bus multiplexé ou des ordres de mise en mode dégradé des fonctions d'éclairage ou de signalisation et des services du projecteur.

12. Système d'éclairage ou de signalisation de véhicule, **caractérisé en ce qu'**il comporte au moins un projecteur d'éclairage ou de signalisation selon l'une des revendications précédentes, chaque projecteur intégrant un contrôleur qui est connecté par un connecteur standard au faisceau du bus multiplexé d'un réseau embarqué de commande et de signalisation.

## Claims

1. An illuminating or indicating lighting fitment for a vehicle, of the type comprising an envelope containing illumination or indicating means and, optionally, service means for performing services such as configuring a light beam or automatic adjustment of the orientation of the light beam, **characterised in that** it includes, mechanically associated with its envelope, an electronic circuit board comprising:
a power connector (71) for connection to an electrical power supply apparatus;
a standard connector (72), whatever the services activated in the lighting fitment may be, the said standard connector being adapted to be connected to the multiplexed bus of an on-board network;
control means (74) for controlling the illuminating or indicating means and, optionally, the service means, the said control means being connected to the said power connector and to the said standard connector in such a way as to exchange, on the multiplexed bus, commands and information about the state of the lighting fitment;
an internal bus (88) which is connected firstly to the control means and secondly to the illuminating or indicating means and to the service means, for the purpose of exchanging between them commands generated by the control means and information about the state of the lighting fitment.

2. A fitment according to Claim 1, **characterised in that** the control means comprise an integrated controller (74) which is connected to the inside of the fitment (70), to the multiplexed bus, and to the electrical loads of the fitment (70) which are controlled by it.

3. A fitment according to Claim 2, **characterised in that** the controller (53; 54) is connected to a bus controller (50) through a wiring bundle (51), and to an electrical vehicle power apparatus through a wiring network (52), and **in that** all of the illuminating or indicating functions and services are entirely controllable by means of a common integrated controller (74) which includes means for activating alone the illuminating or indicating functions, and services which are reserved to a platform level (A to D).

4. A fitment according to Claim 2 or Claim 3, the fitment including a system for lighting on bends, **characterised in that**, when the lighting fitment is fixed in one angular position, a sensor indicates to the integrated controller (74) that the orientation motor is blocked in one angular position, the controller giving at that moment an additional order to an orientation motor to put the optical system into a non-dazzling position, without having to receive a command from outside the fitment, and in particular without overloading either the network or the computer partly on board the vehicle.

5. A fitment according to Claim 2 or Claim 3, **characterised in that**, the diagnostic line being suppressed from the network (2), the bus also exchanges diagnostic data, and **in that** the controller of the bus in the on-board network simultaneously causes an exchange of data to occur linked to the exploitation of the integrated controller (74) and the exchange of diagnostic data.

6. A fitment according to Claim 2 or Claim 3, **characterised in that** the control of the illumination or indication function is anticipated by using information available on the network, such as the speed of the vehicle, the acceleration of the vehicle, navigation indications entered on a forecast controller, which produces an anticipated value for control of illumination or indication, such as lighting or extinction of a lamp, increase or reduction in the light flux produced by one of the lamps, and/or an operational command of the AFS, or smart lighting, type, and/or a command for changing the orientation of the light beam.

7. A fitment according to Claim 2 or Claim 3, **characterised in that** it includes means for enabling lighting or indication performance and the technical signature of the lighting fitment to be specified according to the style of the vehicle which a motor manufacturer wants to design, the operating parameters of lighting or indication, and various services which are associated with them, being determined in registers which are read during at least one step of calibrating the operation of the illumination control system, whereby to give coherence to the behaviour of the various components of the vehicle, this coherence determining the desired signature of the vehicle and/or the manufacturer's trade mark, the illumination control system including a means which, as a function of a signature which is loaded during starting of the vehicle, selects a class of performance for the lighting fitment and its services, such as the scope of illumination, the reaction dynamic for the dynamic orientation of the fitment, etc.

8. A fitment according to Claim 2 or Claim 3, **characterised in that** it includes a means for executing the connection of the fitment on the multiplexed bus of the vehicle, whereby to ensure a periodic dialogue between the fitment and the vehicle, and in particular the insertion of commands from the computer to the fitment, together with information as to the state of the fitment, and especially of the lamps and various service components mentioned earlier herein, whereby the on-board computer permanently indicates the state of the illumination system and the commands which it receives, and whereby also diagnostics are automatically carried out and measurements adapted as a function of critical situations are taken, particularly by detecting fault situations in which it is possible to put a lighting fitment, a lamp of a lighting fitment, or a service component of the fitment, into a faulty operating mode.

9. A fitment according to Claim 2 or Claim 3, **characterised in that** it includes a module for regulating the power supply energy, the electrical supply cable (52) being connected to the output of a power supply regulator whereby to reduce the variations in uni-directional power supply voltage within a range of variation which protects the filament lamps arranged in the fitments, so optimising their useful life.

10. A fitment according to Claim 2 or Claim 3, **characterised in that** the general system of the vehicle for supplying electrical energy no longer receives a high demand for current for the benefit of the lighting fitment, the integrated controller (74) of the light (70) including a module for sequencing switching on of the various loads included in a lighting fitment, whereby the various loads are supplied with power in accordance with programmes which enable smoothing of the demand currents to be optimised.

11. A fitment according to at least one of the preceding Claims, **characterised in that** the integrated controller (74) comprises at least one of the following components:
- a module (75) for managing the electrical power supply which is directly connected to a power supply connector (71), whereby to perform the functions, in particular, of regulation and sequencing of switching on;
- an input module (76) which is connected to the network by connection, through a standard connector (72), to the multiplexed bus of a vehicle;
- a pilot module (77) for the electric motors which are used for the various functions, such as automatic orientation adjustment;
- a module (78) for control of the network which enables information taken from the bus through the connector (73) to be made use of;
- a central unit (79) which carries out a dialogue with memories and the various modules;
- a switching module (80) which puts various loads (84, 93) at the power supply voltage, controlled by the module (75) through an output gate which is connected to a plurality of conductors (83) reserved to the fitment, and which is connected to the group (84) of lamps which are subject to switching control, being further connected through a plurality of conductors (85) to the various electronic power control circuits such as the electronic control circuits or ballasts (87), and connected through a plurality of conductors (86) to the group of lamps which are directly controlled by the switching module (80);
- a module for controlling an internal bus which has a gate for access to: an internal bus (88) for exchanging orders and information about current states with the various services and service modules of the illumination control system; a control and command module for the ballast (87); an opto-electronic sensor (89); an actuator (90) for the functions of orientation configuration of the light beams for control of the light beam on bends; and an actuator (91) for configuring the bottom of the light beam produced by the light according to the operation of the AFS, or smart lighting function, and, if additional lamps are added to the light, the internal bus (88) is also connected to a module for command and control of state (92) which manages the front-end functions of the vehicle;
- a module (96) for processing informations about the state of the fitment (70), which is connected to a plurality of sensors (94) for sensing the current state of the fitment, and in particular to sensors for sensing faults in the actuators of the fitment, whereby in particular to produce information about its current state for passing to the multiplexed bus, or orders to put into fault mode functions of illumination or indication and services of the fitment.

12. An illuminating or indicating system for a vehicle, **characterised in that** it includes at least one illuminating or indicating lighting fitment according to one of the preceding Claims, each fitment incorporating a controller which is connected through a standard connector to the wiring bundle of the multiplexed bus of an on-board control and indicating network.

## Patentansprüche

1. Fahrzeugbeleuchtungs- oder -signalgebungsscheinwerfer mit einem Gehäuse, das Beleuchtungs- oder Signalgebungsmittel sowie eventuell Betriebsmittel zur Ausführung von Betriebsfunktionen, wie zum Beispiel die Formung des Beleuchtungslichtbündels oder die automatische Regelung der Lichtbündelausrichtung, umfasst, **dadurch gekennzeichnet, dass** er eine mit seinem Gehäuse mechanisch verbundene elektronische Karte aufweist, die umfasst:
einen Versorgungsverbinder (71) für den Anschluss an eine Leistungsstromversorgungsvorrichtung;
einen Standardverbinder (72) für jegliche am Scheinwerfer aktivierte Betriebsfunktionen, wobei der Standardverbinder dazu bestimmt ist, mit dem Multiplexbus eines Bordnetzes verbunden zu werden;
Steuermittel (74), um die Beleuchtungs- oder Signalgebungsmittel und eventuell die Betriebsmittel zu steuern, wobei diese Steuermittel mit dem Versorgungsverbinder und dem Standardverbinder verbunden sind, um Befehle und Informationen bezüglich des Scheinwerferzustandes über den Multiplexbus auszutauschen;
einen internen Bus (88), der zum einen an die Steuermittel und zum anderen an die Beleuchtungs- oder Signalgebungsmittel und die Betriebsmittel angeschlossen ist, um zwischen ihnen von den Steuermitteln erzeugte Befehle und Informationen über den Scheinwerferzustand auszutauschen.

2. Scheinwerfer nach Anspruch 1,
**dadurch gekennzeichnet, dass** die Steuermittel eine integrierte Steuerung (74) umfassen, die im Innern des Scheinwerfers (70) an den Multiplexbus und an die von ihr gesteuerten elektrischen Lasten des Scheinwerfers (70) angeschlossen ist.

3. Scheinwerfer nach Anspruch 2,
**dadurch gekennzeichnet, dass** die Steuerung (53; 54) durch einen Kabelstrang (51) mit einer Bussteuerung (50) und durch einen Kabelstrang (52) mit einer Stromversorgungsvorrichtung des Fahrzeugs verbunden ist und dass alle Beleuchtungs- oder Signalgebungs- sowie Betriebsfunktionen vollständig von ein- und derselben integrierten Steuerung (70) gesteuert werden können, die Mittel umfasst, um jeweils nur die einer Plattformstufe (A bis D) zugeordneten Beleuchtungs- oder Signalgebungsund Betriebsfunktionen zu aktivieren.

4. Scheinwerfer nach Anspruch 2 oder 3, wobei der Scheinwerfer ein Kurvenbeleuchtungssystem umfasst,
**dadurch gekennzeichnet, dass**, wenn der Scheinwerfer in einer Winkelposition fixiert ist, ein Sensor der integrierten Steuerung (74) anzeigt, dass der Ausrichtungsmotor in einer Winkelposition blockiert ist, wobei die Steuerung in diesem Moment einem Ausrichtungsmotor, der das optische System in eine keine Blendwirkung erzeugende Position bringt, einen zusätzlichen Befehl erteilt, ohne dass hierzu ein Befehl von außerhalb des Scheinwerfers empfangen werden muss und insbesondere ohne dass das Netz oder der Rechner an Bord des Fahrzeugs überlastet werden müssen.

5. Scheinwerfer nach Anspruch 2 oder 3,
**dadurch gekennzeichnet, dass** wenn das Netz (2) keine Diagnoseleitung aufweist, der Bus zudem Diagnosedaten austauscht und dass die Steuerung des Busses des Bordnetzes sowohl den Datenaustausch in Verbindung mit dem Betrieb der integrierten Steuerung (74) also auch den Austausch von Diagnosedaten verwaltet.

6. Scheinwerfer nach Anspruch 2 oder 3,
**dadurch gekennzeichnet, dass** das Steuern der Beleuchtung oder Signalgebung durch Nutzen der im Netz verfügbaren Informationen wie die Fahrzeuggeschwindigkeit, die Fahrzeugbeschleunigung oder Navigationsangaben antizipiert und in eine Antizipationssteuereinheit eingegeben werden, die einen Antizipationswert zum Steuern der Beleuchtung oder Signalgebung, wie das Ein- oder Ausschalten einer Lampe, die Verstärkung oder Verringerung des von einer der Lampen erzeugten Lichtstroms und/oder einen Befehl für eine AFS-Funktion oder intelligente Beleuchtung und/oder einen Befehl zum Ändern der Ausrichtung des Lichtbündels erzeugt.

7. Scheinwerfer nach Anspruch 2 oder 3,
**dadurch gekennzeichnet, dass** er Mittel umfasst, die eine Spezifizierung der Beleuchtungs- oder Signalgebungsleistungen und der technischen Signatur des Scheinwerfers je nach den stilistischen Merkmalen des Fahrzeugs ermöglichen, das ein Automobilhersteller entwickeln möchte, wobei die Betriebsparameter der Beleuchtung oder Signalgebung und der diesen zugeordneten verschiedenen Betriebsfunktionen in Registern festgelegt sind, die bei wenigstens einer Etappe des Parametrierens des Betriebs des Beleuchtungssteuersystems gelesen werden, um die Kohärenz des Verhaltens der verschiedenen Bauteile des Fahrzeugs zu gewährleisten, von der die gewünschte Signatur des Fahrzeugs und/oder der Marke des Herstellers abhängig ist, wobei das Beteuchtungssteuersystem ein Mittel umfasst, das in Abhängigkeit von einer beim Starten des Fahrzeugs geladenen Signatur eine Leistungsklasse für den Scheinwerfer und dessen Betriebsfunktionen, wie zum Beispiel die Reichweite der Beleuchtung, die Reaktionsdynamik der dynamischen Ausrichtung des Scheinwerfers etc., auswählt.

8. Scheinwerfer nach Anspruch 2 oder 3,
**dadurch gekennzeichnet, dass** er ein Mittel zum Anschließen des Scheinwerfers an den Multiplexbus des Fahrzeugs aufweist, um einen regelmäßigen Dialog zwischen Scheinwerfer und Fahrzeug und insbesondere das Übertragen von Befehlen des Rechners an den Scheinwerfer sowie Informationen über den Scheinwerferzustand, insbesondere der Lampen und verschiedenen bereits erwähnten Betriebsorgane, zu gewährleisten, derart, dass der Bordrechner fortlaufend den Zustand des Beleuchtungssystems und die von ihm empfangenen Befehle anzeigt und dass automatisch Diagnosen sowie geeignete Messungen in Abhängigkeit von kritischen Situationen durchgeführt werden, insbesondere indem Störungssituationen erkannt werden, in denen es möglich ist, einen Scheinwerfer, eine Lampe eines Scheinwerfers, ein Betriebsorgan des Scheinwerfers in einen Störbetriebsmodus zu versetzen.

9. Scheinwerfer nach Anspruch 2 oder 3,
**dadurch gekennzeichnet, dass** er ein Modul zur Regelung der Versorgungsenergie umfasst, wobei das Stromversorgungskabel (52) an den Ausgang eines Versorgungsreglers angeschlossen ist, um die Schwankungen der Versorgungsgteichspannung auf einen Schwankungsbereich zu verringern, der die in den Scheinwerfern angeordneten Fadenlampen schützt, wodurch ihre Lebensdauer optimiert wird.

10. Scheinwerfer nach Anspruch 2 oder 3,
**dadurch gekennzeichnet, dass** das Hauptelektroenergieversorgungssystem des Fahrzeugs keine starken Stromstöße seitens des Scheinwerfers mehr erhält, da die integrierte Steuerung (74) des Scheinwerfers (70) ein Modul für das sequenzierte Einschalten der verschiedenen in einem Scheinwerfer enthaltenen Lasten umfasst, so dass diese Lasten nach Schemata gespeist werden, die eine Optimierung der Glättung der Stoßströme ermöglichen.

11. Scheinwerfer nach wenigstens einem der vorhergehenden Ansprüche,
**dadurch gekennzeichnet, dass** die integrierte Steuerung (74) wenigstens eines der folgenden Bauelemente umfasst:
- ein Modul (75) zur Verwaltung der Stromversorgung, das direkt an einen Versorgungsverbinder (71) angeschlossen ist, um insbesondere die Regelungs- und Einschaltsequenzierungsfunktionen zu erfüllen;
- ein Eingangsmodul (76), das am Netz mittels eines Standardverbinders (72) am Multiplexbus eines Fahrzeugs angeschlossen ist;
- ein Modul (77) für die Steuerung der Elektromotoren, die für die verschiedenen Funktionen wie zum Beispiel die automatische Leuchtweiteregelung benutzt werden;
- ein Modul (78) zur Überwachung des Netzes, das es ermöglicht, die über den Verbinder (73) vom Bus übertragenen Informationen auszuwerten;
- eine Zentraleinheit (79), die mit Speichern und den verschiedenen Modulen im Dialog steht;
- ein Schaltmodul (80), das es ermöglicht, verschiedene Lasten (84, 93) auf die von dem Modul (75) kontrollierte Versorgungsspannung durch ein Ausgangstor zu bringen, das an mehrere dem Scheinwerfer zugeordnete Leiter (83) angeschlossen ist, die mit der einer Schaltkontrolle unterzogenen Lampeneinheit (84) verbunden sind, die über mehrere Leiter (85) mit den verschiedenen elektronischen Leistungskontrollschaltkreisen wie dem elektronischen Kontrollschaltkreis oder dem Vorschaltgerätkreis (87) verbunden sind, die über mehrere Leiter (86) mit der direkt vom Schaltmodul (80) gesteuerten Lampeneinheit verbunden sind;
- ein Steuermodul für einen internen Bus, das ein Zugangstor zu einem internen Bus (88) aufweist, der mit den verschiedenen Betriebsfunktionen und Betriebsmodulen des Beleuchtungssteuersystems Befehle und Zustandsinformationen austauscht und an ein Kontroll- und Steuermodul des Vorschaltgeräts (87), einen optoelektronischen Sensor (89), ein Stellglied (90), Steuerfunktionen für die Lichtbündelausrichtung in Kurven und ein Stellglied (91) zur Verformung des unteren Bereichs des vom Scheinwerfer erzeugten Lichtbündels je nach Funktionalitäten des AFS bzw. der intelligenten Beleuchtung angeschlossen ist, wobei der interne Bus (88) im Fall einer Ergänzung des Scheinwerfers durch zusätzliche Lampen außerdem an ein Modul für die Zustandssteuerung und -kontrolle (92) angeschlossen ist, das die Verwaltung der Funktionalitäten der Vorderseite des Fahrzeugs gewährleistet;
- ein Modul (96) für die Verarbeitung von Informationen zum Zustand des Scheinwerfers (70), das an eine Vielzahl von Sensoren (94) zur Erfassung des Scheinwerferzustandes, insbesondere Sensoren zur Erfassung von Störungen der Stellglieder des Scheinwerfers, angeschlossen ist, um insbesondere an den Multiplexbus geleitete Informationen zum Scheinwerferzustand oder Umstellungsbefehle auf den Störbetriebsmodus der Beleuchtungs- oder Signalgebungsfunktionen und Betriebsfunktionen des Scheinwerfers zu erzeugen.

12. Beleuchtungs- oder Signalgebungssystem für Fahrzeuge,
**dadurch gekennzeichnet, dass** es wenigstens einen Beleuchtungs- oder Signalgebungsscheinwerfer gemäß einem der vorhergehenden Ansprüche aufweist, wobei jeder Scheinwerfer eine Steuerung aufweist, die durch einen Standardverbinder mit dem Kabelstrang des Multiplexbusses eines Steuerungs- und Signalgebungs-Bordnetzes verbunden ist.
